# EUROPEAN PATENT APPLICATION

(11) **EP 4 641 687 A1**
(43) Date of publication of application: **29.10.2025**
(21) Application number: 23925933.6
(22) Date of filing: 03.08.2023
(51) Int. Cl.: H01M 4/58, H01M 4/136, H01M 10/0525

(54) **POSITIVE ELECTRODE ACTIVE MATERIAL, POSITIVE ELECTRODE SHEET, SECONDARY BATTERY, AND ELECTRIC DEVICE**

(30) Priority: 06.03.2023 CN 202310202191
(71) Applicant: Contemporary Amperex Technology (Hong Kong) Limited, Hong Kong (HK)
(72) Inventor: QIN, Yiming, Ningde, Fujian 352100 (CN); XU, Xiaofu, Ningde, Fujian 352100 (CN); SHANG, Yibo, Ningde, Fujian 352100 (CN); PAN, Jianfu, Ningde, Fujian 352100 (CN); LIU, Qian, Ningde, Fujian 352100 (CN); YE, Yonghuang, Ningde, Fujian 352100 (CN)
(74) Representative: Gong, Jinping
(86) International application number: PCT/CN2023/110909
(87) International publication number: WO 2024/183229

(57) **Abstract**

Provided are a positive electrode active material, a positive electrode sheet, a secondary battery, and an electric device. The positive electrode active material includes a first active material and a second active material. The first active material and the second active material have different material compositions. In a test curve of the positive electrode active material using a state of charge SOC as an abscissa and dV/dSOC as an ordinate, 0.5≤dV/dSOC≤2.0, and 0.3≤ΔSOC<1.0, where V represents a voltage value, and ΔSOC represents a difference value of an SOC value range corresponding to the dV/dSOC value range. For self-discharge using the positive electrode active material, self-discharge screening accuracy can be improved.

## Description

### CROSS-REFERENCE TO RELATED APPLICATIONS

The present application claims priority to Chinese Patent Application No. 202310202191.9, filed on March 6, 2023 and entitled "Positive Electrode Active Material, Positive Electrode Sheet, Secondary Battery, and Electric Device", which is incorporated herein by reference in its entirety.

### TECHNICAL FIELD

The present application relates to the field of battery technologies, and more specifically to a positive electrode active material, a positive electrode sheet, a secondary battery, and an electric device.

### BACKGROUND

Secondary batteries are advantageous in reliable operating performance, no pollution, no memory effect, etc., and therefore are widely used. For example, with growing awareness of environmental protection and the increasing prevalence of new energy vehicles, there is an anticipated explosive growth in demand for secondary traction batteries. However, the expansion of the application scope of secondary batteries also imposes stringent challenges on performance of the secondary batteries.

The self-discharge performance is often used to screen secondary batteries that meet performance requirements. However, since a positive electrode active material has a relatively flat charge/discharge plateau, such screening is difficult, and screening accuracy is low.

### SUMMARY

The present application provides a positive electrode active material, a positive electrode sheet, a secondary battery, and an electric device. The present application can improve self-discharge screening accuracy.

According to a first aspect, the present application proposes a positive electrode active material. The positive electrode active material comprises a first active material and a second active material. The first active material and the second active material have different material compositions. In a test curve of the positive electrode active material using a state of charge SOC as an abscissa and dV/dSOC as an ordinate, 0.5≤dV/dSOC≤2.0, and 0.3≤ΔSOC<1.0. V represents a voltage value, and ΔSOC represents a difference value of an SOC value range corresponding to the dV/dSOC value range.

Therefore, in the embodiments of the present application, ΔSOC corresponding to 0.5≤dV/dSOC≤2.0 is regulated. When 0.3≤ΔSOC<1.0, that is, 0.5≤y3≤2.0 and 0.3≤Δx3<1.0, a charge/discharge curve of the positive electrode active material in the region is subject to a significant change, and has a certain slope, thereby facilitating self-discharge screening for the positive electrode active material, and reducing a risk of false rejection or false acceptance of secondary batteries to some extent.

In some embodiments, in the test curve of the positive electrode active material using an SOC as an abscissa and dV/dSOC as an ordinate, 0.5≤dV/dSOC≤2.0, and 0.5≤ΔSOC≤0.9. When the above ranges are satisfied, the embodiments of the present application can further facilitate improvement of the self-discharge screening accuracy.

In some embodiments, in a test curve of the first active material using an SOC as an abscissa and dV/dSOC as an ordinate, 0.5≤dV/dSOC≤2.0, and 0.01≤ΔSOC≤0.10. ΔSOC represents a difference value of an SOC value range corresponding to the dV/dSOC value range. When the first active material satisfies the above ranges, use of the first active material in combination with the second active material can enable the charge/discharge curve of the positive electrode active material to be subject to a significant change and have a certain slope, thereby facilitating self-discharge screening for the positive electrode active material, and reducing a risk of false rejection or false acceptance of secondary batteries to some extent.

In some embodiments, in the test curve of the first active material using an SOC as an abscissa and dV/dSOC as an ordinate, 0≤dV/dSOC<0.25; and 0.5≤ΔSOC≤0.6; and/or 0.25≤dV/dSOC<0.5; and 0.2≤ΔSOC≤0.3; and/or 2<dV/dSOC; and 0.28≤ΔSOC<1.00.

In some embodiments, the first active material comprises one or a plurality of a phosphate-based material, a silicate-based material, or a borate-based material.

In some embodiments, the phosphate-based material comprises LiₓA_{y}MeₐM_{b}P_{1-c}X_{c}Y_{z}, where 0≤x≤1.3, 0≤y≤1.3, and 0.9≤x+y≤1.3; 0≤a≤1.5, 0≤b≤0.7, and 0.9≤a+b≤1.5; 0≤c≤0.5; 3≤z≤5; A is selected from one or a plurality of Na, K, or Mg; Me is selected from one or a plurality of Mn, Fe, Co, or Ni; M is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce; X is selected from one or a plurality of S, Si, Cl, B, C, and N; and Y is selected from one or a plurality of O or F.

In some embodiments, the phosphate-based material comprises one or a plurality of LiFePO₄, LiNiPO₄, LiCoPO₄, LiV_{0.67}PO₄, Li_{0.33}Ti_{0.67}PO₄, LiMnPO₄, or LiFe_{0.5}Mn_{0.5}PO₄.

In some embodiments, the silicate-based material comprises a compound with the molecular formula Li₂₊ₚQ_{q}NₘSiO_{f} and a modified compound thereof, -1≤p≤1, 0.001≤q≤1, 0≤m≤1, 2≤f≤4, Q is selected from one or a plurality of Mn, Fe, Co, or Ni; and N is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce.

In some embodiments, the silicate-based material comprises one or a plurality of Li₂FeSiO₄, Li₂NiSiO₄, Li₂CoSiO₄, Li₂MnSiO₄, or Li₂Fe_{0.5}Mn_{0.5}SiO₄.

In some embodiments, the borate-based material comprises a compound with the molecular formula Li₁₊tTₙZₛBOₑ and a modified compound thereof, -0.5≤t≤0.5, 0.001≤n≤1, 0≤s≤1, 1≤e≤3, T is selected from one or a plurality of Mn, Fe, Co, or Ni; and Z is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce.

In some embodiments, the borate-based material comprises one or a plurality of LiFeBO₃, LiCoBO₃, LiMnBO₃, LiNiBO₃, or LiMn_{0.5}Fe_{0.5}BO₃.

In some embodiments, in a test curve of the second active material using an SOC as an abscissa and dV/dSOC as an ordinate, 0.5≤dV/dSOC≤2.0, and 0.35≤ΔSOC<1.00, optionally 0.60≤ΔSOC<1.00. ΔSOC represents a difference value of an SOC value range corresponding to the dV/dSOC value range. In the embodiments of the present application, when the second active material satisfies the above ranges, introduction of the second active material can improve an overall discharge plateau of the positive electrode active material, thereby increasing the slope of the charge/discharge curve, and facilitating self-discharge performance screening for secondary batteries using the positive electrode active material.

In some embodiments, the second active material comprises a compound with the molecular formula LiₐNi_{g}CoₕRₖSⱼOᵣCₜ and a modified compound thereof, where 0.85≤d≤1.15, 0<g<1, 0<h<1, 0<k<1, 0≤j≤0.1, 1≤r≤2, 0≤t≤1, t+r≤2, R is selected from one or both of Mn and Al, S is selected from one or a plurality of Zr, Zn, Cu, Cr, Mg, Fe, V, Ti, Sr, Sb, Y, W, or Nb, and C is selected from one or a plurality of N, F, S, or Cl.

In some embodiments, the second active material comprises one or a plurality of LiNi_{0.8}Co_{0.1}Mn_{0.1}O₂, LiNi_{0.7976}Co_{0.0907}Mn_{0.0997}Zr_{0.003}O₂, or LiNi_{0.7976}Co_{0.0997}Mn_{0.0007}Ti_{0.003}O₂.

In some embodiments, the second active material has at least one of a single-crystalline structure, a single-crystalline-like structure, and a polycrystalline structure. A material with the single-crystalline structure or the single-crystalline-like structure has no grain boundary inside and is less likely to be inter-granularly cracked after many charge/discharge cycles. The single-crystalline material has a small specific surface area, a small contact area with an electrolyte solution, and a small side reaction. The single-crystalline material has a high mechanical strength, is less prone to cracking during compaction, and has a high compaction density. The single-crystalline material has small particles and can reach sufficient contact with a conductive agent and a binder to form a desirable conductive network, thereby facilitating transport of active ions such as lithium ions and electrons. By mixing a single-crystalline material and a polycrystalline material, large particle diameters are mixed with small particle diameters, and different levels of particle diameters are combined. The small particle diameters of the polycrystalline material can improve overall compaction of the materials. As the polycrystalline material contains many fine particles, the polycrystalline material can provide an electrical conduction function between the particles to increase electrical conductivity between the particles and improve an overall electrical conduction capability, thereby achieving the effect of 1+1>2.

In some embodiments, the mass percentage of the first active material is m% based on the total mass of the positive electrode active material; and the mass percentage of the second active material is n% based on the total mass of the positive electrode active material; where 1.5≤m/n≤9.0; optionally 1.5≤m/n≤4.0, further optionally 60≤m≤90, and/or 10≤n≤40, further optionally 60≤m≤80, and/or 20≤n≤40. When the first active material and the second active material satisfy the above mass proportions, the overall discharge plateau of the positive electrode active material can be further improved, thereby increasing the slope of the charge/discharge curve, and facilitating self-discharge performance screening for secondary batteries using the positive electrode active material.

According to a second aspect, the present application proposes a positive electrode sheet. The positive electrode sheet comprises the positive electrode active material according to any one of the embodiments of the first aspect of the present application.

According to a third aspect, the present application proposes a secondary battery. The secondary battery comprises a positive electrode sheet. The positive electrode sheet comprises the positive electrode sheet according to the second aspect of the present application.

According to a fourth aspect, the present application proposes an electric device, comprising the secondary battery according to the third aspect of the present application.

### DESCRIPTION OF DRAWINGS

To describe the technical solutions in embodiments of the present application more clearly, the following briefly describes the accompanying drawings needed for the embodiments of the present application. Clearly, the accompanying drawings described below are merely some embodiments of the present application. Those of ordinary skill in the art can still derive other accompanying drawings from these accompanying drawings without creative efforts.
FIG. 1 is a schematic diagram of an embodiment of a secondary battery according to the present application;
FIG. 2 is a schematic exploded view of an embodiment of the secondary battery of FIG. 1;
FIG. 3 is a schematic diagram of an embodiment of a battery module according to the present application;
FIG. 4 is a schematic diagram of an embodiment of a battery pack according to the present application;
FIG. 5 is a schematic exploded view of an embodiment of the battery pack shown in FIG. 4;
FIG. 6 is a schematic diagram of an embodiment of an electric device including a secondary battery according to the present application as a power supply; and
FIG. 7 is charge/discharge curves (V-SOC) and test curve graphs (dV/dSOC-SOC) of secondary batteries from Example 2, Comparative Example 1, and Comparative Example 2 according to the present application.

The accompanying drawings are not necessarily drawn to scale.

### Description of reference numerals:

1-battery pack; 2-upper box body; 3-lower box body; 4-battery module;
5-secondary battery; 51-housing; 52-electrode assembly;
53-cover plate;
6-electric device.

### DESCRIPTION OF EMBODIMENTS

Specific embodiments of a positive electrode active material, a positive electrode sheet, a secondary battery, and an electric device in the present application will be described below in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Self-discharge of a secondary battery is an important factor affecting performance of the secondary battery. When self-discharge of a secondary battery occurs in a system, a cycle life is significantly reduced due to the impact of the self-discharge. Therefore, effective detection of self-discharge is a key to ensuring the performance of a secondary battery.

A state of charge SOC of a secondary battery is estimated mainly by voltage and current calculation. A voltage plateau of a positive electrode active material such as a polyanion-type active material is relatively flat. For example, an interval of a state of charge SOC corresponding to a 3.65 V voltage is 20% to 80%. Therefore, it is difficult to estimate the SOC of the secondary battery through a voltage. Consequently, it is difficult to perform self-discharge screening, and a secondary battery whose self-discharge does not meet an indicator cannot be effectively screened out, affecting the performance of the secondary battery.

In view of the above problem, in the embodiments of the present application, a charge/discharge curve of a positive electrode active material is improved from a perspective of improving a material composition of the positive electrode active material, thereby improving self-discharge screening accuracy, reducing difficulty in self-discharge screening, and reducing a risk of false rejection or false acceptance of secondary batteries. False rejection may be understood as marking a qualified sample as an unqualified one, causing a screening error. False acceptance may be understood as marking an unqualified sample as a qualified one, causing a screening error. Next, the material composition of the positive electrode active material will be described in detail.

### Positive electrode active material

According to a first aspect, some embodiments of the present application propose a positive electrode active material. The positive electrode active material includes a first active material and a second active material. The first active material and the second active material have different material compositions. In a test curve of the positive electrode active material using a state of charge SOC as an abscissa and dV/dSOC as an ordinate, 0.5≤dV/dSOC≤2.0, and 0.3≤ΔSOC<1.0. ΔSOC represents a difference value of an SOC value range corresponding to the dV/dSOC value range.

The SOC in the embodiments of the present application represents a state of charge of a secondary battery, and may be used to reflect an actual capacity of the secondary battery. Before charging, it may be considered that a capacity of the secondary battery is A₀ mAh, which corresponds to 0% SOC. When the secondary battery is fully charged, it may be considered that the secondary battery reaches its rated capacity A mAh, which corresponds to 100% SOC. During charging of the secondary battery, a capacity of the secondary battery may be x% (A-A₀) mAh, which corresponds to x% SOC. x% may be any value from 0 to 100. For example, if x is 70, the secondary battery is charged to 70% (A-A₀) mAh of its capacity, which corresponds to 70% SOC.

The SOC may be detected by using a method and equipment known in the art, for example, an Ampere-hour integration method. Specifically, an initial capacity A₀ of the secondary battery before charging is determined, and a current charged into the secondary battery is integrated with time to calculate a capacity At in the secondary battery. The percentage of At relative to (a difference value between the rated capacity A and the initial capacity A₀) is the percentage of the SOC.

A charge/discharge test is performed on a secondary battery that uses the positive electrode active material, and a voltage value during charge/discharge is collected as V, and a state of charge SOC is calculated. A charge/discharge curve graph (V-SOC graph) is plotted by using the state of charge SOC as an abscissa and the voltage value V as an ordinate. For a test method in the embodiments of the present application, references may be made to GB/T19596, GB/T31484-2015, GB/T31485-2015, GB/T31486-2015, or "Electric vehicles traction battery safety requirements". The test may be performed by using equipment well known in the art, such as a secondary battery charge/discharge machine and a high and low temperature chamber. A specific test process of the charge/discharge curve is as follows: at 25°C, (1) performing constant-current charging at a rate of 0.1C until an upper cut-off voltage is reached, and then performing constant-voltage charging until a current drops below 0.05C; (2) resting the secondary battery for 10 min; and (3) performing constant-current discharging at 0.1C until a lower cut-off voltage is reached. A discharge capacity curve at this time is the desired curve.

Differentiation is performed on the charge/discharge curve to obtain a relationship between the state of charge SOC and dV/dSOC. A test curve is plotted by using the state of charge SOC as an abscissa and dV/dSOC as an ordinate. In the curve, values of the ordinate dV/dSOC may be divided into four regions, which are respectively denoted as y1, y2, y3, and y4, where a value of y1 is 0 to 0.25, a value of y2 is 0.25 to 0.5, a value of y3 is 0.5 to 2, and a value of y4 is greater than or equal to 2. Corresponding to the value of y1, ΔSOC is denoted as Δx1; corresponding to the value of y2, ΔSOC is denoted as Δx2; corresponding to the value of y3, ΔSOC is denoted as Δx3; and corresponding to the value of y4, ΔSOC is denoted as Δx4.

0≤dV/dSOC<0.25, that is, 0≤y1<0.25. The value of y1 is smaller, meaning that the charge/discharge curve of the secondary battery has a small slope, and is approximately parallel to the abscissa. A value range of the SOC corresponding to y1 is denoted as x1, and x1 represents one or a plurality of intervals. A difference value of each region is obtained by subtracting a lower limit value from an upper limit value in the interval. When x1 covers only one interval, Δx1 represents a difference value of the interval. When x1 covers a plurality of intervals, Δx1 represents the sum of difference values of the intervals. For example, when the value of y1 is 0 to 0.25, and a value of x1 is 0.1 to 0.3, Δx1 is (0.3-0.1)=0.2; or when the value of y1 is 0 to 0.25, a value of x1 is 0.1 to 0.3, and a value of x1 is 0.5 to 0.7, Δx1 is (0.3-0.1)+(0.7-0.5)=0.4.

0.25≤dV/dSOC<0.50, that is, 0.25≤y2<0.50. y2>y1, meaning that the charge/discharge curve of the secondary battery has an increased slope in this region, which facilitates self-discharge performance screening of the secondary battery. A value range of the SOC corresponding to y2 is denoted as x2, and x2 represents one or a plurality of intervals. When x2 covers only one interval, Δx2 represents a difference value of the interval. When x2 covers a plurality of intervals, Δx2 represents the sum of difference values of the intervals.

0.5≤dV/dSOC≤2.0, that is, 0.5≤y3≤2.0. y3>y2, meaning that the charge/discharge curve of the secondary battery has a further increased slope in this region. The charge/discharge curve is subject to a significant trend change, which facilitates self-discharge performance screening of the secondary battery. A value range of the SOC corresponding to y3 is denoted as x3, and x3 represents one or a plurality of intervals. When x3 covers only one interval, Δx3 represents a difference value of the interval. When x3 covers a plurality of intervals, Δx3 represents the sum of difference values of the intervals.

2<dV/dSOC, that is, 2<y4. y4>y3, meaning that the charge/discharge curve of the secondary battery has a still further increased slope in this region. The charge/discharge curve is subject to a significant trend change, which facilitates improvement of self-discharge screening accuracy. A value range of the SOC corresponding to y4 is denoted as x4, and x4 represents one or a plurality of intervals. When x4 covers only one interval, Δx4 represents a difference value of the interval. When x4 covers a plurality of intervals, Δx4 represents the sum of difference values of the intervals.

Since the value range of the SOC is 0 to 100% (i.e., 0 to 1), x1+x2+x3+x4=1.

In the embodiments of the present application, ΔSOC corresponding to 0.5≤dV/dSOC≤2.0 is regulated. When 0.3≤ΔSOC<1.0, that is, 0.5≤y3≤2.0 and 0.3≤Δx3<1.0, a charge/discharge curve of the positive electrode active material in the region is subject to a significant change, and has a certain slope, thereby facilitating self-discharge screening for the positive electrode active material, and reducing a risk of false rejection or false acceptance of secondary batteries to some extent.

In some embodiments, in the test curve of the positive electrode active material using an SOC as an abscissa and dV/dSOC as an ordinate, 0.5≤dV/dSOC≤2.0, and 0.5≤ΔSOC≤0.9. That is, when 0.5≤y3≤2.0, and 0.5≤Δx3≤0.9, it is possible to further facilitate improvement of the self-discharge screening accuracy.

In some embodiments, in the test curve of the positive electrode active material using an SOC as an abscissa and dV/dSOC as an ordinate, 0≤dV/dSOC<0.25; 0.1≤ΔSOC≤0.3, that is, 0≤y1<0.25, and 0.1≤Δx1≤0.3. ΔSOC represents a difference value of an SOC value range corresponding to the dV/dSOC value range.

In some embodiments, in the test curve of the positive electrode active material using an SOC as an abscissa and dV/dSOC as an ordinate, 0.25≤dV/dSOC<0.50; 0.1≤ΔSOC≤0.2, that is, 0.25≤y2<0.50, and 0.1≤Δx2≤0.2. ΔSOC represents a difference value of an SOC value range corresponding to the dV/dSOC value range.

In some embodiments, in the test curve of the positive electrode active material using an SOC as an abscissa and dV/dSOC as an ordinate, 2<dV/dSOC; 0.1≤ΔSOC≤0.2, that is, 2<y4, and 0.1≤Δx4≤0.2. ΔSOC represents a difference value of an SOC value range corresponding to the dV/dSOC value range.

In the embodiments of the present application, the positive electrode active material may include the first active material and the second active material. The first active material and the second active material have different material compositions, and vary in performance. For example, the first active material has a relatively flat discharge plateau and suffers from a problem of difficult self-discharge screening. Introduction of the second active material can improve the overall discharge plateau of the positive electrode active material, thereby increasing the slope of the charge/discharge curve, and facilitating self-discharge performance screening for secondary batteries using the positive electrode active material.

In the embodiments of the present application, when the first active material satisfies at least one of the following conditions, the first active material has a relatively flat discharge plateau, which is not conducive to self-discharge screening. In this case, introduction of the second active material can significantly increase the slope of the overall charge/discharge curve of the positive electrode active material, thereby facilitating improvement of the self-discharge screening accuracy.

In some embodiments, in a test curve of the first active material using an SOC as an abscissa and dV/dSOC as an ordinate, 0≤dV/dSOC<0.25; 0.5≤ΔSOC≤0.6, that is, 0≤y1<0.25, and 0.5≤Δx1≤0.6. ΔSOC represents a difference value of an SOC value range corresponding to the dV/dSOC value range.

In some embodiments, in a test curve of the first active material using an SOC as an abscissa and dV/dSOC as an ordinate, 0.25≤dV/dSOC<0.50; 0.2≤ΔSOC≤0.3, that is, 0.25≤y2<0.50, and 0.2≤Δx2≤0.3. ΔSOC represents a difference value of an SOC value range corresponding to the dV/dSOC value range.

In some embodiments, in a test curve of the first active material using an SOC as an abscissa and dV/dSOC as an ordinate, 0.5≤dV/dSOC≤2.0, and 0.01≤ΔSOC≤0.10, that is, 0.5≤y3≤2.0, and 0.01≤Δx3≤0.10. ΔSOC represents a difference value of an SOC value range corresponding to the dV/dSOC value range.

In some embodiments, in a test curve of the first active material using an SOC as an abscissa and dV/dSOC as an ordinate, 2<dV/dSOC; 0.28≤ΔSOC<1.00, that is, 2<y4, and 0.28≤Δx4<1.00. ΔSOC represents a difference value of an SOC value range corresponding to the dV/dSOC value range.

In some embodiments, the first active material comprises one or a plurality of a phosphate-based material, a silicate-based material, or a borate-based material.

As some examples, the phosphate-based material includes LiₓA_{y}MeₐM_{b}P_{1-c}X_{c}Y_{z}, where 0≤x≤1.3, 0≤y≤1.3, and 0.9≤x+y≤1.3; 0≤a≤1.5, 0≤b≤0.7, and 0.9≤a+b≤1.5; 0≤c≤0.5; 3≤z≤5; A is selected from one or a plurality of Na, K, or Mg; Me is selected from one or a plurality of Mn, Fe, Co, or Ni; M is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce; X is selected from one or a plurality of S, Si, Cl, B, C, or N; and Y is selected from one or a plurality of O or F.

Optionally, the phosphate-based material includes one or a plurality of LiFePO₄, LiNiPO₄, LiCoPO₄, LiV_{0.67}PO₄, Li_{0.33}Ti_{0.67}PO₄, LiMnPO₄, or LiFe_{0.5}Mn_{0.5}PO₄.

As some examples, the silicate-based material includes a compound with the molecular formula Li₂₊ₚQ_{q}NₘSiO_{f} and a modified compound thereof, -1≤p≤1, 0.001≤q≤1, 0≤m≤1, 2≤f≤4, Q is selected from one or a plurality of Mn, Fe, Co, or Ni; and N is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce.

Optionally, the silicate-based material includes one or a plurality of Li₂FeSiO₄, Li₂NiSiO₄, Li₂CoSiO₄, Li₂MnSiO₄, or Li₂Fe_{0.5}Mn_{0.5}SiO₄.

As some examples, the borate-based material includes a compound with the molecular formula Li₁₊tTₙZₛBOₑ and a modified compound thereof, -0.5≤t≤0.5, 0.001≤n≤1, 0≤s≤1, 1≤e≤3, T is selected from one or a plurality of Mn, Fe, Co, or Ni; and Z is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce.

Optionally, the borate-based material includes one or a plurality of LiFeBO₃, LiCoBO₃, LiMnBO₃, LiNiBO₃, or LiMn_{0.5}Fe_{0.5}BO₃.

In the embodiments of the present application, when the positive electrode active material includes the second active material, and the second active material satisfies at least one of the following conditions, a risk of false rejection or false acceptance in a self-discharge screening process can be reduced.

In some embodiments, in a test curve of the second active material using an SOC as an abscissa and dV/dSOC as an ordinate, 0.5≤dV/dSOC≤2.0, and 0.35≤ΔSOC<1.00, optionally 0.60≤ΔSOC<1; that is, 0.5≤y3≤2, and 0.35≤Δx3<1, optionally 0.60≤Δx3<1. ΔSOC represents a difference value of an SOC value range corresponding to the dV/dSOC value range. In the present application, when a value range of x3 corresponding to y3 is regulated to satisfy the above range, the second active material can be enabled to significantly increase the slope of the charge/discharge curve of the positive electrode active material, thereby facilitating improvement of the self-discharge screening accuracy.

In some embodiments, in a test curve of the second active material using an SOC as an abscissa and dV/dSOC as an ordinate, 0≤dV/dSOC<0.25; 0≤ΔSOC≤0.1, that is, 0≤y1<0.25, and 0≤Δx1≤0.1. ΔSOC represents a difference value of an SOC value range corresponding to the dV/dSOC value range.

In some embodiments, in a test curve of the second active material using an SOC as an abscissa and dV/dSOC as an ordinate, 0.25≤dV/dSOC<0.50; 0.1≤ΔSOC≤0.2, that is, 0.25≤y2<0.50, and 0.1≤Δx2≤0.2. ΔSOC represents a difference value of an SOC value range corresponding to the dV/dSOC value range.

In some embodiments, in a test curve of the second active material using an SOC as an abscissa and dV/dSOC as an ordinate, 2<dV/dSOC; 0.1≤ΔSOC≤0.2, that is, 2<y4, and 0.1≤Δx4≤0.2. ΔSOC represents a difference value of an SOC value range corresponding to the dV/dSOC value range.

In some embodiments, the second active material comprises a compound with the molecular formula LiₐNi_{g}CoₕRₖSⱼOᵣCₜ and a modified compound thereof, where 0.85≤d≤1.15, 0<g<1, 0<h<1, 0<k<1, 0≤j≤0.1, 1≤r≤2, 0≤t≤1, t+r≤2, R is selected from one or both of Mn and Al, S is selected from one or a plurality of Zr, Zn, Cu, Cr, Mg, Fe, V, Ti, Sr, Sb, Y, W, or Nb, and C is selected from one or a plurality of N, F, S, or Cl. The modified compound may mean that a compound is subject to doping modification, or a coating layer is disposed on a particle surface for coating modification. The coating layer may be provided as a conductive layer, such as a carbon layer or an organic polymer layer.

By way of example, the second active material includes one or a plurality of LiNi_{0.8}Co_{0.1}Mn_{0.1}O₂, LiNi_{0.7976}Co_{0.0907}Mn_{0.0997}Zr_{0.003}O₂, or LiNi_{0.7976}Co_{0.0997}Mn_{0.0007}Ti_{0.003}O₂.

In some embodiments, the second active material has at least one of a single-crystalline structure, a single-crystalline-like structure, and a polycrystalline structure.

A material with the single-crystalline structure or the single-crystalline-like structure has no grain boundary inside and is less likely to be inter-granularly cracked after many charge/discharge cycles. The single-crystalline material has a small specific surface area, a small contact area with an electrolyte solution, and a small side reaction. The single-crystalline material has a high mechanical strength, is less prone to cracking during compaction, and has a high compaction density. The single-crystalline material has small particles and can reach sufficient contact with a conductive agent and a binder to form a desirable conductive network, thereby facilitating transport of active ions such as lithium ions and electrons.

By mixing a single-crystalline material and a polycrystalline material, large particle diameters are mixed with small particle diameters, and different levels of particle diameters are combined. The small particle diameters of the polycrystalline material can improve overall compaction of the materials. As the polycrystalline material contains many fine particles, the polycrystalline material can provide an electrical conduction function between the particles to increase electrical conductivity between the particles and improve an overall electrical conduction capability, thereby achieving the effect of 1+1>2.

**In** the embodiments of the present application, a material can be observed by a scanning electron microscope SEM, and the single-crystalline structure, the single-crystalline-like structure, and the polycrystalline material can be identified from particle appearances. The single-crystalline structure and the single-crystalline-like structure are large particles with a smooth surface, whereas the polycrystalline structure is a large sphere formed by aggregating a plurality of primary particles, and a surface of the large sphere includes a plurality of small spheres.

**In** some embodiments, the mass percentage of the first active material is m% based on the total mass of the positive electrode active material; and the mass percentage of the second active material is n% based on the total mass of the positive electrode active material; where 1.5≤m/n≤9.0. Optionally, 1.5≤m/n≤4.0. By way of example, m/n may be 1.5, 2.0, 3.0, 4.0, 5.0, 6.0, 7.0, 8.0, 9.0, or a range formed by any two of the above values.

**In** some embodiments, 60≤m≤90. Optionally, 60≤m≤80. By way of example, the mass percentage of the first active material may be 60%, 65%, 70%, 75%, 80%, 85%, 90%, or a range formed by any two of the above values.

In some embodiments, 10≤n≤40. Optionally, 20≤n≤40. By way of example, the mass percentage of the second active material may be 10%, 20%, 30%, 40%, or a range formed by any two of the above values.

When the mass percentages of the first active material and the second active material fall within the above ranges, the self-discharge screening accuracy can be further improved.

### Positive electrode sheet

According to a second aspect, the present application proposes a positive electrode sheet.

In some embodiments, the positive electrode sheet includes a positive electrode current collector and a positive electrode film layer disposed on at least one surface of the positive electrode current collector. For example, the positive electrode current collector has two surfaces opposite in its own thickness direction, and the positive electrode film layer is disposed on either one or both of the two opposite surfaces of the positive electrode current collector. The positive electrode film layer includes a positive electrode active material, and the positive electrode active material includes the positive electrode active material according to any one of the embodiments of the first aspect of the present application. In the embodiments of the present application, ΔSOC corresponding to 0.5≤dV/dSOC≤2.0 is regulated. A charge/discharge curve of the positive electrode active material in the region is subject to a significant change, and has a certain slope, thereby facilitating self-discharge screening for the positive electrode active material, and reducing a risk of false rejection or false acceptance of secondary batteries to some extent.

In some embodiments, the positive electrode film layer further optionally includes a positive electrode conductive agent. The type of the positive electrode conductive agent is not particularly limited in the present application. As an example, the positive electrode conductive agent includes one or a combination of a plurality selected from superconducting carbon, conductive graphite, acetylene black, carbon black, Ketjen black, carbon dot, carbon nanotube, graphene, and carbon nanofiber. In some embodiments, the mass percentage of the positive electrode conductive agent is less than 5% based on the total mass of the positive electrode film layer.

In some embodiments, the positive electrode film layer further optionally includes a positive electrode binder. The type of the positive electrode binder is not particularly limited in the present application. As an example, the positive electrode binder may include one or a combination of a plurality selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. In some embodiments, the mass percentage of the positive electrode binder is less than 5% based on the total mass of the positive electrode film layer.

In some embodiments, the positive electrode current collector may use a metal foil or a composite current collector. An aluminum foil or an aluminum alloy foil may be used as an example of the metal foil. The composite current collector may include a polymer material base layer and a metal material layer formed on at least one surface of the polymer material base layer. As an example, the metal material may include one or a combination of a plurality selected from aluminum, an aluminum alloy, nickel, a nickel alloy, titanium, a titanium alloy, silver, and a silver alloy, and the polymer material base layer may include one or a combination of a plurality selected from polypropylene (PP), polyethylene terephthalate (PET), polybutylene terephthalate (PBT), polystyrene (PS), and polyethylene (PE).

The positive electrode film layer is generally formed by coating a positive electrode slurry on the positive electrode current collector, followed by drying and cold pressing. The positive electrode slurry is generally formed by dispersing a positive electrode active material, an optional conductive agent, an optional binder, and any other component in a solvent and stirring them uniformly. The solvent may be N-methylpyrrolidone (NMP), but is not limited thereto.

### Secondary battery

According to a third aspect, some embodiments of the present application provide a secondary battery. The secondary battery includes a positive electrode sheet, a negative electrode sheet, a separator disposed between the positive electrode sheet and the negative electrode sheet, and an electrolyte solution. The positive electrode sheet includes the positive electrode sheet according to any one of the embodiments of the second aspect of the present application. In the embodiments of the present application, a charge/discharge curve of a positive electrode active material is subject to a significant change, and has a certain slope, thereby facilitating self-discharge screening for the positive electrode active material, and reducing a risk of false rejection or false acceptance of secondary batteries to some extent.

### [Negative electrode sheet]

The negative electrode sheet includes a negative electrode current collector and a negative electrode film layer disposed on at least one surface of the negative electrode current collector. The negative electrode film layer includes a negative electrode active material.

As an example, the negative electrode current collector has two surfaces opposite in its own thickness direction, and the negative electrode film layer is disposed on either one or both of the two opposite surfaces of the negative electrode current collector.

In some embodiments, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode active material may be a negative electrode active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

In some embodiments, the negative electrode film layer further optionally includes a negative electrode binder. The negative electrode binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

### [Electrolyte]

The electrolyte functions to conduct ions between the positive electrode sheet and the negative electrode sheet. The type of the electrolyte is not specifically limited in this application, and may be selected according to a requirement. For example, the electrolyte may be liquid, gelled or all solid.

In some embodiments, the electrolyte uses an electrolyte solution. The electrolyte solution includes an electrolyte salt and a solvent.

As an example, a lithium salt may include one or a combination of a plurality selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP).

As an example, an organic solvent may include one or a combination of a plurality selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

### [Separator]

In some embodiments, the secondary battery further includes a separator. The type of the separator is not particularly limited in this application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which not particularly limited.

In some embodiments, the positive electrode sheet, the negative electrode sheet, and the separator may be manufactured into the electrode assembly through a winding process or a lamination process.

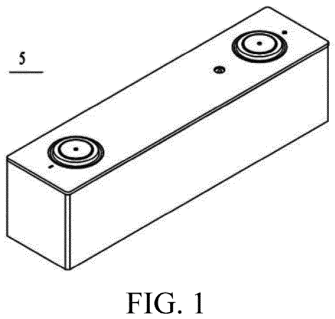

The shape of the secondary battery is not limited in this application, and may be a cylindrical shape, a square shape, or any other shape. For example, FIG. 1 illustrates a square secondary battery 5 as an example.

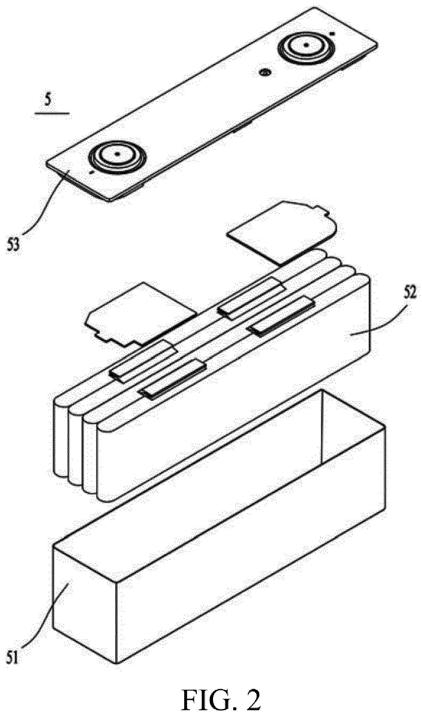

In some embodiments, as shown in FIG. 1 and FIG. 2, an outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 is configured to cover the opening to close the accommodating chamber. The positive electrode sheet, the negative electrode sheet, and the separator may be formed into the electrode assembly 52 through a winding process or a lamination process. The electrode assembly 52 is packaged in the accommodating chamber. The electrolyte solution is impregnated into the electrode assembly 52. There may be one or a plurality of the electrode assemblies 52 contained in the secondary battery 5, and adjustments may be made according to requirements.

A method for manufacturing the secondary battery of the present application is well known. In some embodiments, the positive electrode sheet, the separator, the negative electrode sheet, and the electrolyte solution may be assembled to form a secondary battery. As an example, the positive electrode sheet, the separator, and the negative electrode sheet may be formed into an electrode assembly through a winding process or a lamination process. The electrode assembly may be placed into the outer package, dried, then be injected with an electrolyte solution, and be subject to procedures such as vacuum sealing, resting, formation, and shaping to obtain a secondary battery.

In some embodiments of the present application, the secondary battery according to the present application may be assembled into a battery module. The battery module may contain a plurality of secondary batteries. The specific number may be adjusted according to the application and capacity of the battery module.

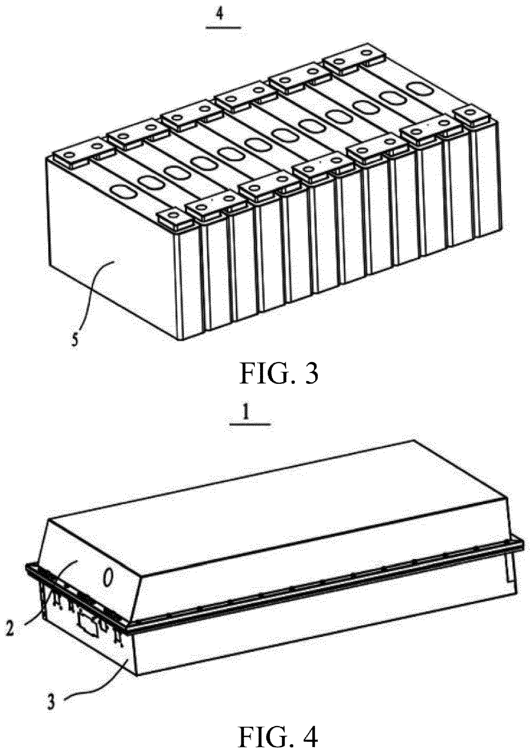

FIG. 3 is a schematic diagram of a battery module 4 as an example. As shown in FIG. 3, in the battery module 4, a plurality of secondary batteries 5 may be arranged sequentially along the length direction of the battery module 4. Certainly, the secondary batteries may alternatively be arranged in any other manner. Further, the plurality of secondary batteries 5 may be fixed by fasteners.

Optionally, the battery module 4 may further include a housing with an accommodating space. The plurality of secondary batteries 5 are accommodated in the accommodating space.

In some embodiments, the above battery module may be further assembled into a battery pack. The number of battery modules contained in the battery pack may be adjusted according to the application and capacity of the battery pack.

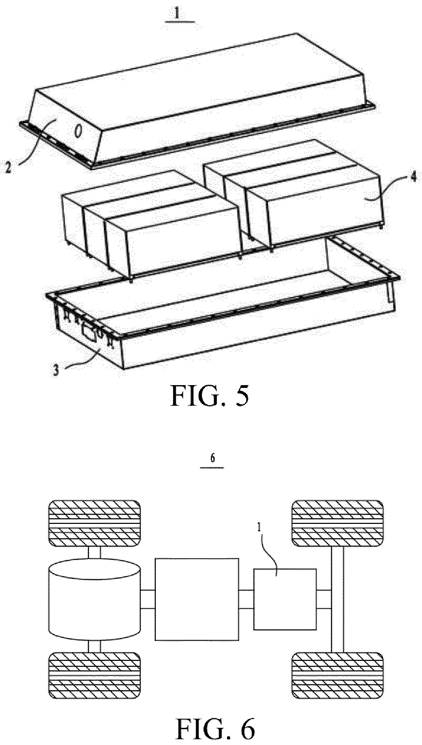

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form a closed space for accommodating the battery modules 4. The plurality of battery modules 4 may be arranged in any manner in the battery box.

### Electric device

According to a fourth aspect, the present application provides an electric device. The electric device includes at least one of the secondary battery, the battery module, and the battery pack according to the present application. The secondary battery, the battery module, and the battery pack may be used as a power supply for the electric device, or as an energy storage unit for the electric device. The electric device may include, but is not limited to, mobile equipment (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

For the electric device, the secondary battery, the battery module, or the battery pack may be selected according to the use need.

FIG. 6 is a schematic diagram of an electric device as an example. The electric device 6 is a battery electric vehicle, a hybrid electric vehicle, a plug-in hybrid electric vehicle, or the like. To satisfy a requirement for a high power and a high energy density of the electric device, a battery pack 1 or a battery module may be used.

As another example, the electric device may be a cell phone, a tablet computer, a notebook computer, or the like. This electric device is generally required to be thin and lightweight, and may use a secondary battery as a power supply.

### Examples

The embodiments of the present application will be described below. The embodiments described below are exemplary and are only used to explain the present application, and should not be construed as limiting the present application. If specific technologies or conditions are not specified in the embodiments, follow the technologies or conditions described in the literature in the art or follow the product manual. The reagents or instruments used without specifying the manufacturer(s) are conventional products that are commercially available.

### Example 1

### 1. Preparation of a positive electrode sheet

A 12 µm thick aluminum foil was used as a positive electrode current collector.

Lithium iron phosphate LiFePO₄ as a first active material, LiNi_{0.8}Co_{0.1}Mn_{0.1}O₂ (NCM811) as a second active material, carbon black as a conductive agent, and polyvinylidene fluoride (PVDF) as a binder were sufficiently stirred and mixed in an appropriate amount of NMP as a solvent at a weight ratio of 70:20:5:1 to form a uniform positive electrode slurry. The positive electrode slurry was uniformly coated on a surface of the aluminum foil as the positive electrode current collector, dried, and cold pressed to obtain a positive electrode sheet.

### 2. Preparation of a negative electrode sheet

An 8 µm thick copper foil was used as a negative electrode current collector.

Graphite as a negative electrode active material, together with Super P as a conductive agent, CMC-Na as a thickener, and styrene-butadiene rubber (SBR) as a binder, was uniformly mixed in deionized water to prepare a negative electrode slurry. The solid content in the negative electrode slurry was 30 wt%, and the mass ratio of graphite, Super P, CMC, and styrene-butadiene rubber (SBR) as the binder in the solid components was 80:15:3:2. The negative electrode slurry was coated on the copper foil as the current collector and dried at 85°C, then cold pressed, trimmed, cut, and slit, and then dried under vacuum conditions at 120°C for 12 h to produce a negative electrode sheet.

### 3. Preparation of an electrolyte solution

In an environment with a water content of less than 10 ppm, ethylene carbonate EC and diethyl carbonate DMC as non-aqueous organic solvents were mixed at the volume ratio of 1:1 to obtain an electrolyte solution solvent, and then lithium salt LiPF₆ was mixed with the mixed solvent to prepare an electrolyte solution having a lithium salt concentration of 1 mol/L.

### 4. Separator

A porous polyethylene (PE) film was used as a separator.

### 5. Preparation of a lithium-ion battery

The positive electrode sheet, the separator, and the negative electrode sheet described above were stacked in order such that the separator was located between the positive electrode sheet and the negative electrode sheet to provide a separation function, and then the three items were wound to obtain an electrode assembly; and the electrode assembly was placed into an outer package, dried, then injected with an electrolyte solution, and subject to procedures such as vacuum sealing, resting, formation, and shaping to obtain a lithium-ion battery.

### Comparative Examples 1 to 3

A lithium-ion battery was prepared with a method similar to that used in Example 1, except that the material compositions of the active materials were adjusted in Comparative Examples 1 to 3.

### Examples 2-1 to 2-4

A lithium-ion battery was prepared with a method similar to that used in Example 1, except that the mass percentage m% of the first active material was adjusted in Examples 2-1 to 2-4.

### Examples 3-1 and 3-2

A lithium-ion battery was prepared with a method similar to that used in Example 1, except that the material compositions of the first active material were adjusted in Examples 3-1 and 3-2.

Relevant parameters of the comparative examples and the examples are illustrated in Table 1.

### Test part:

### 1. dV/dSOC-SOC test curves of the lithium-ion batteries

At 25°C, constant-current charging was performed on the lithium-ion batteries prepared in the above example and Comparative Example 1 at a rate of 0.1C until an upper cut-off voltage was reached and then constant-voltage charging was performed until a current drops below 0.05C; the lithium-ion batteries were rested for 10 min; and then constant-current discharging was performed at 0.1C until a lower cut-off voltage was reached. A discharge capacity curve at this time is a charge/discharge curve.

Differentiation was performed on the charge/discharge curve to obtain a relationship between the state of charge SOC and dV/dSOC. A test curve was plotted by using the state of charge SOC as an abscissa and dV/dSOC as an ordinate to obtain the desired curve.

### Test results:

The test results are illustrated in Table 1.

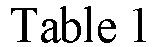

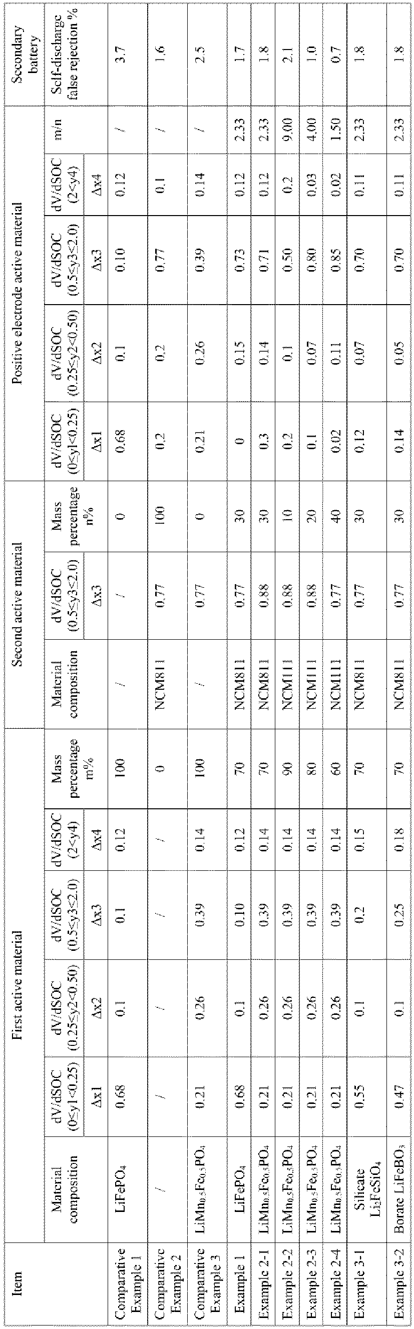

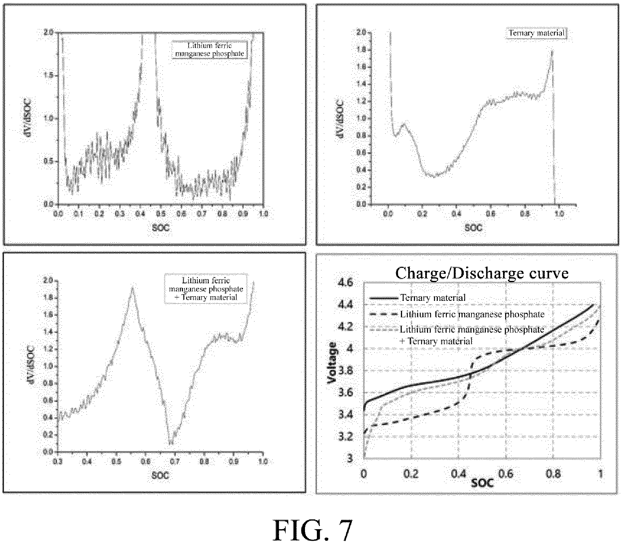

FIG. 7 shows charge/discharge curves (V-SOC) and test curve graphs (dV/dSOC-SOC) of the secondary batteries from Comparative Example 1, Comparative Example 2, and Example 2. In FIG. 7, SOC represents the state of charge, and Voltage represents a voltage; and dV/dSOC represents differentiation on the charge/discharge curves.

It can be seen from Table 1 that, in the embodiments of the present application, ΔSOC corresponding to 0.5≤dV/dSOC≤2 is regulated. When 0.3≤ΔSOC<1, that is, 0.5≤y3≤2 and 0.3≤Δx3<1, especially when 0.5≤Δx3≤0.9, the charge/discharge curve of the positive electrode active material in the region is subject to a significant change, and has a certain slope, thereby facilitating self-discharge screening for the positive electrode active material, and reducing a risk of false rejection or false acceptance of secondary batteries to some extent. It should be noted that, since a ternary material is used alone in Comparative Example 2, a charge/discharge curve of the ternary material has a large slope, and a risk of false rejection or false acceptance of secondary batteries is small.

Although the embodiments of the present application have been illustrated and described, it should be understood by those skilled in the art that the above embodiments are not to be construed as limiting the present application and that changes, replacements, and modifications can be made to the embodiments without departing from the spirit, principles, and scope of the present application.

## Claims

1. A positive electrode active material, comprising a first active material and a second active material, wherein the first active material and the second active material have different material compositions, and in a test curve of the positive electrode active material using a state of charge SOC as an abscissa and dV/dSOC as an ordinate, 0.5≤dV/dSOC≤2.0, and 0.3≤ΔSOC<1.0,
wherein V represents a voltage value, and ΔSOC represents a difference value of an SOC value range corresponding to the dV/dSOC value range.

2. The positive electrode active material according to claim 1, wherein
in the test curve of the positive electrode active material using an SOC as an abscissa and dV/dSOC as an ordinate, 0.5≤dV/dSOC≤2.0, and 0.5≤ΔSOC≤0.9.

3. The positive electrode active material according to claim 1 or 2, wherein
in a test curve of the first active material using an SOC as an abscissa and dV/dSOC as an ordinate,
0.5≤dV/dSOC≤2.0, and 0.01≤ΔSOC≤0.10,
wherein ΔSOC represents a difference value of an SOC value range corresponding to the dV/dSOC value range.

4. The positive electrode active material according to claim 3, wherein
in the test curve of the first active material using an SOC as an abscissa and dV/dSOC as an ordinate,
0≤dV/dSOC<0.25; and 0.5≤ΔSOC≤0.6; and/or
0.25≤dV/dSOC<0.5; and 0.2≤ΔSOC≤0.3; and/or
2<dV/dSOC; and 0.28≤ΔSOC<1.00.

5. The positive electrode active material according to any one of claims 1 to 4, wherein the first active material comprises one or a plurality of a phosphate-based material, a silicate-based material, or a borate-based material.

6. The positive electrode active material according to claim 5, wherein the phosphate-based material comprises LiₓA_{y}MeₐM_{b}P_{1-c}X_{c}Y_{z}, wherein 0≤x≤1.3, 0≤y≤1.3, and 0.9≤x+y≤1.3; 0≤a≤1.5, 0≤b≤0.7, and 0.9≤a+b≤1.5; 0≤c≤0.5; 3≤z≤5; A is selected from one or a plurality of Na, K, or Mg; Me is selected from one or a plurality of Mn, Fe, Co, or Ni; M is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce; X is selected from one or a plurality of S, Si, Cl, B, C, or N; and Y is selected from one or a plurality of O or F.

7. The positive electrode active material according to claim 6, wherein the phosphate-based material comprises one or a plurality of LiFePO₄, LiNiPO₄, LiCoPO₄, LiV_{0.67}PO₄, Li_{0.33}Ti_{0.67}PO₄, LiMnPO₄, or LiFe_{0.5}Mn_{0.5}PO₄.

8. The positive electrode active material according to claim 5, wherein the silicate-based material comprises a compound with the molecular formula Li₂₊ₚQ_{q}NₘSiO_{f} and a modified compound thereof, -1≤p≤1, 0.001≤q≤1, 0≤m≤1, 2≤f≤4, Q is selected from one or a plurality of Mn, Fe, Co, or Ni; and N is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce.

9. The positive electrode active material according to claim 8, wherein the silicate-based material comprises one or a plurality of Li₂FeSiO₄, Li₂NiSiO₄, Li₂CoSiO₄, Li₂MnSiO₄, or Li₂Fe_{0.5}Mn_{0.5}SiO₄.

10. The positive electrode active material according to claim 5, wherein the borate-based material comprises a compound with the molecular formula Li₁₊tTₙZₛBOₑ and a modified compound thereof, - 0.5≤t≤0.5, 0.001≤n≤1, 0≤s≤1, 1≤e≤3, T is selected from one or a plurality of Mn, Fe, Co, or Ni; and Z is selected from one or a plurality of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, or Ce.

11. The positive electrode active material according to claim 10, wherein the borate-based material comprises one or a plurality of LiFeBO₃, LiCoBO₃, LiMnBO₃, LiNiBO₃, or LiMn_{0.5}Fe_{0.5}BO₃.

12. The positive electrode active material according to any one of claims 1 to 11, wherein
in a test curve of the second active material using an SOC as an abscissa and dV/dSOC as an ordinate,
0.5≤dV/dSOC≤2.0, and 0.35≤ΔSOC<1.00, optionally 0.60≤ΔSOC<1.00,
wherein ΔSOC represents a difference value of an SOC value range corresponding to the dV/dSOC value range.

13. The positive electrode active material according to any one of claims 1 to 12, wherein
the second active material comprises a compound with the molecular formula LiₐNi_{g}CoₕRₖSⱼOᵣCₜ and a modified compound thereof, wherein 0.85≤d≤1.15, 0<g<1, 0<h<1, 0<k<1, 0≤j≤0.1, 1≤r≤2, 0≤t≤1, t+r≤2, R is selected from one or both of Mn and Al, S is selected from one or a plurality of Zr, Zn, Cu, Cr, Mg, Fe, V, Ti, Sr, Sb, Y, W, or Nb, and C is selected from one or a plurality of N, F, S, or Cl.

14. The positive electrode active material according to claim 13, wherein
the second active material comprises one or a plurality of LiNi_{0.8}Co_{0.1}Mn_{0.1}O₂, LiNi_{0.7976}Co_{0.0997}Mn_{0.0997}Zr_{0.003}O₂, or LiNi_{0.7976}Co_{0.0007}Mn_{0.0997}Ti_{0.003}O₂.

15. The positive electrode active material according to any one of claims 1 to 14, wherein
the mass percentage of the first active material is m% based on the total mass of the positive electrode active material; and
the mass percentage of the second active material is n% based on the total mass of the positive electrode active material;
wherein 1.5<m/n<9.0.

16. A positive electrode sheet, comprising the positive electrode active material according to any one of claims 1 to 15.

17. A secondary battery, comprising the positive electrode sheet according to claim 16.

18. An electric device, comprising the secondary battery according to claim 17.
